# EUROPEAN PATENT APPLICATION

(11) **EP 4 733 336 A1**
(43) Date of publication of application: **29.04.2026**
(21) Application number: 25208531.1
(22) Date of filing: 14.10.2025
(51) Int. Cl.: C08F 222/10, C08F 2/44, C08K 3/22, C08F 299/06, H01F 1/053, H01F 1/06, H01F 1/08

(54) **RADICALLY POLYMERIZABLE RESIN COMPOSITION**

(30) Priority: 25.10.2024 JP 2024187963
(71) Applicant: AISIN CORPORATION, Aichi 448-8650 (JP)
(72) Inventor: Yamada, Minami, Kariya, 448-8650 (JP); Adachi, Akifumi, Kariya, 448-8650 (JP); Ozawa, Yuichi, Kanagawa, 254-0016 (JP)
(74) Representative: Kramer Barske Schmidtchen Patentanwälte PartG mbB

(57) **Abstract**

A radically polymerizable resin composition containing a urethane (meth)acrylate (A) and a magnetic powder (B), wherein the urethane (meth)acrylate (A) has a structural unit derived from 1,6-hexamethylene diisocyanate and a structural unit derived from 2-hydroxylethyl methacrylate, the urethane (meth)acrylate (A) is a crystalline urethane (meth)acrylate, the radically polymerizable resin composition contains a radical polymerization initiator (C) and an N-oxyl compound (D), and a content of the N-oxyl compound (D) is 0.20 to 0.60 parts by mass based on 100 parts by mass of the urethane (meth)acrylate (A).

## Description

### TECHNICAL FIELD

This disclosure relates to a radically polymerizable resin composition.

### BACKGROUND DISCUSSION

Magnets used in home electric appliances and the like are mainly produced by a sintering method, but it is difficult to process the magnets into a complicated shape. On the other hand, a bonded magnet obtained by subjecting a particulate magnet to molding processing using a resin or the like as a binder has a high degree of freedom in shape, and thus is used in various applications including electric and electronic components, home electric appliances, and motors of automobiles and the like.

With the spread of applications and the improvement in performance of products, the performance required for binders such as resins has also become complicated. A resin composition for a bonded magnet produced by using a thermosetting resin as a binder having particularly excellent heat resistance has been developed.

For example, WO 2022/255217 discloses a thermosetting composition containing a crystalline radically polymerizable compound having a melting point in the range of 30 to 150°C and a magnetic powder for the purpose of improving fluidity and a curing rate.

As described above, a resin composition, which is a raw material of a bonded magnet and contains a particulate magnet, a thermosetting resin and the like, obtains a desired shape by molding processing. Since the time until the resin composition is cured is short, a sufficient pot life is not secured, and thus there is a problem in moldability. On the other hand, it is necessary to terminate curing quickly after molding processing, and there is a problem in achieving both moldability and curability.

In addition, the composition before molding processing also has a problem in handleability due to stickiness or the like of the raw materials of the thermosetting resin. Therefore, there has been a demand for a composition that can achieve both moldability and curability and is used as a raw material for a bonded magnet having no problem in handleability.

Therefore, an object of this disclosure is to provide a radically polymerizable resin composition which is excellent in moldability and curability and is also excellent in handleability.

A need thus exists for a radically polymerizable resin composition which is not susceptible to the drawback mentioned above.

### SUMMARY

This disclosure has found that a composition containing a specific urethane (meth)acrylate, a magnetic powder, a radical polymerization initiator, and a specific amount of an N-oxyl compound can solve the above problems.

That is, this disclosure relates to the following.
[1] A radically polymerizable resin composition containing a urethane (meth)acrylate (A) and a magnetic powder (B), wherein the urethane (meth)acrylate (A) has a structural unit derived from 1,6-hexamethylene diisocyanate and a structural unit derived from 2-hydroxylethyl methacrylate, the urethane (meth)acrylate (A) is a crystalline urethane (meth)acrylate, the radically polymerizable resin composition contains a radical polymerization initiator (C) and an N-oxyl compound (D), and a content of the N-oxyl compound (D) is 0.20 to 0.60 parts by mass based on 100 parts by mass of the urethane (meth)acrylate (A).
[2] The radically polymerizable resin composition according to [1], wherein the urethane (meth)acrylate (A) has a melting point of 30 to 150°C.
[3] The radically polymerizable resin composition according to [1] or [2], wherein the urethane (meth)acrylate (A) is solid at 23°C.
[4] The radically polymerizable resin composition according to any one of [1] to [3], wherein a total content of the structural unit derived from 1,6-hexamethylene diisocyanate and the structural unit derived from 2-hydroxylethyl methacrylate in the urethane (meth)acrylate (A) is 90 to 100 mass%.
[5] The radically polymerizable resin composition according to any one of [1] to [4], wherein the N-oxyl compound (D) is 4-hydroxy-2,2,6,6-tetramethylpiperidine-1-oxyl.
[6] The radically polymerizable resin composition according to any one of [1] to [5], wherein a content of the N-oxyl compound (D) is 0.35 to 0.60 parts by mass based on 100 parts by mass of the urethane (meth)acrylate (A).
[7] The radically polymerizable resin composition according to any one of [1] to [6], wherein a content of the phenol-based polymerization inhibitor is 0.05 parts by mass or less based on 100 parts by mass of the urethane (meth)acrylate (A).
[8] The radically polymerizable resin composition according to any one of [1] to [7], wherein a 10-hour half-life temperature of the radical polymerization initiator (C) is 80 to 150°C.
[9] The radically polymerizable resin composition according to any one of [1] to [8], wherein a content of the magnetic powder (B) is 100 to 500 parts by mass based on 100 parts by mass of the urethane (meth)acrylate (A).
[10] The radically polymerizable resin composition according to any one of [1] to [9], wherein the magnetic powder (B) is at least one selected from the group consisting of a ferrite magnetic powder, an Alnico magnetic powder, and a rare earth magnetic powder.
[11] The radically polymerizable resin composition according to any one of [1] to [10], wherein the magnetic powder (B) is at least one selected from the group consisting of samarium iron nitrogen magnetic powder, samarium cobalt magnetic powder, and neodymium magnetic powder.
[12] The radically polymerizable resin composition according to any one of [1] to [11], wherein the magnetic powder (B) is samarium iron nitrogen magnetic powder.
[13] A magnet obtained by molding the radically polymerizable resin composition according to any one of [1] to [12].

According to this disclosure, it is possible to provide a radically polymerizable resin composition that is excellent in moldability and curability and is also excellent in handleability. Therefore, the radically polymerizable resin composition of this disclosure can be suitably used as a raw material of a bonded magnet.

### DETAILED DESCRIPTION

### [Radically polymerizable resin composition]

The radically polymerizable resin composition of this disclosure is a radically polymerizable resin composition containing a urethane (meth)acrylate (A) and a magnetic powder (B), wherein the urethane (meth)acrylate (A) has a structural unit derived from 1,6-hexamethylene diisocyanate and a structural unit derived from 2-hydroxylethyl methacrylate, the urethane (meth)acrylate (A) is a crystalline urethane (meth)acrylate, the radically polymerizable resin composition contains a radical polymerization initiator (C) and an N-oxyl compound (D), and the content of the N-oxyl compound (D) is 0.20 to 0.60 parts by mass based on 100 parts by mass of the urethane (meth)acrylate (A).

The radically polymerizable resin composition of this disclosure is excellent in moldability and curability, and is also excellent in handleability.

The reason why the radically polymerizable resin composition of this disclosure is excellent in moldability, curability, and handleability is not clear, but is considered as follows.

The urethane (meth)acrylate contained in the radically polymerizable resin composition of this disclosure is synthesized using hexamethylene diisocyanate and hydroxyl ethyl methacrylate as raw materials. It is considered that the radically polymerizable resin composition of this disclosure contains hexamethylene diisocyanate, which is a symmetric and relatively long-chain methylene chain skeleton, and thus easily exhibits crystallinity, and has a low melting point, so that handleability, curability, and moldability are excellent. Furthermore, the radically polymerizable resin composition of this disclosure contains a specific amount of an N-oxyl compound. It is considered that the N-oxyl compound can capture excessively generated radicals, but decomposes again to return to the original N-oxyl compound, and can exhibit a curing retarding effect for a long time. When the radically polymerizable resin composition contains the N-oxyl compound in a specific amount, the radically polymerizable resin composition has excellent curability while exhibiting a curing retarding effect. Therefore, it is considered that, as compared with other polymerization inhibitors and the like, the N-oxyl compound can provide a long pot life particularly even in the presence of magnetic powder which is considered to promote decomposition of radicals, and thus imparts excellent moldability.

### <Urethane (meth)acrylate (A)>

The radically polymerizable resin composition of this disclosure contains a urethane (meth)acrylate (A), the urethane (meth)acrylate (A) has a structural unit derived from 1,6-hexamethylene diisocyanate and a structural unit derived from 2-hydroxylethyl methacrylate, and the urethane (meth)acrylate (A) is a crystalline urethane (meth)acrylate.

When the urethane (meth)acrylate (A) has the above configuration, the shape of the radically polymerizable resin composition can be freely adjusted while having necessary magnetic properties as a raw material of a bonded magnet, and thus the radically polymerizable resin composition is further excellent in moldability and curability, and is also excellent in handleability.

The urethane (meth)acrylate is a (meth)acrylate adduct having an isocyanate group of a polyisocyanate. More specifically, the urethane (meth)acrylate is a compound obtained by forming a urethane bond from an isocyanate group of a polyisocyanate and a hydroxyl group of a (meth)acrylate having a hydroxyl group. The urethane (meth)acrylate (A) contains 1,6-hexamethylene diisocyanate as a polyisocyanate and 2-hydroxylethyl methacrylate as a (meth)acrylate having a hydroxyl group.

In this disclosure, "(meth)acrylate" refers to at least one selected from the group consisting of "acrylate" and "methacrylate".

The urethane (meth)acrylate (A) has a structural unit derived from 1,6-hexamethylene diisocyanate and a structural unit derived from 2-hydroxylethyl methacrylate, but may contain other structural units.

Specific examples of the other structural units include a structural unit derived from a polyisocyanate other than 1,6-hexamethylene diisocyanate, a structural unit derived from an alcohol compound having a (meth)acrylic group other than 2-hydroxylethyl methacrylate, a structural unit derived from a polyol, and a structural unit derived from a polyester polyol.

Examples of the polyisocyanate other than 1,6-hexamethylene diisocyanate include aromatic isocyanate compounds, alicyclic isocyanate compounds, and aliphatic isocyanate compounds. At least one selected from the group consisting of alicyclic isocyanate compounds and aliphatic isocyanate compounds is preferable, and both of the alicyclic isocyanate compounds and the aliphatic isocyanate compounds are more preferable. In addition, a trifunctional isocyanate having an isocyanurate ring obtained by trimerizing a bifunctional isocyanate compound (nurate type polyisocyanate), an isocyanate prepolymer modified with a polyol, and the like are also suitably used.

Examples of the aromatic isocyanate compound include 1,3-xylylene diisocyanate, 2,4-tolylene diisocyanate, 2,6-tolylene diisocyanate, 4,4'-diphenyl diisocyanate, 1,5-naphthalene diisocyanate, 4,4'-diphenylmethane diisocyanate, polymethylene polyphenyl polyisocyanate, and m-tetramethylxylene diisocyanate.

Examples of the alicyclic isocyanate compound include hydrogenated xylylene diisocyanate(1,3-bis (isocyanatomethyl)cyclohexane), isophorone diisocyanate, norbornene diisocyanate, dicyclohexylmethane diisocyanate, hydrogenated methylene bisphenylene diisocyanate, and 1,4-cyclohexane diisocyanate.

Examples of the aliphatic isocyanate compound include trimethylene diisocyanate. These isocyanate compounds may be used singly or in combination of two or more kinds thereof.

In addition, a nurate type polyisocyanate is also preferable, and for example, a nurate type polyisocyanate of isophorone diisocyanate is preferably at least one selected from a trimer, a pentamer, a heptamer, a nonamer, and a 11 mer of isophorone diisocyanate (IPDI), in which the IPDI monomer forms a nurate ring, or a mixture thereof.

The ratio of the structural unit derived from 1,6-hexamethylene diisocyanate in the structural unit derived from polyisocyanate is preferably 70 to 100 mol%, more preferably 80 to 100 mol%, still more preferably 90 to 100 mol%, still more preferably 95 to 100 mol%, still more preferably 99 to 100 mol%, and still more preferably 100 mol%. The structural unit derived from polyisocyanate may be composed only of the structural unit derived from 1,6-hexamethylene diisocyanate.

Examples of the alcohol compound having a (meth)acrylic group other than 2-hydroxylethyl methacrylate include hydroxyl ethyl acrylate, hydroxypropyl (meth)acrylate, hydroxybutyl (meth)acrylate, and hydroxyphenoxypropyl (meth)acrylate.

The ratio of the structural unit derived from 2-hydroxylethyl methacrylate in the structural unit derived from the alcohol compound having a (meth)acrylic group is preferably 70 to 100 mol%, more preferably 80 to 100 mol%, still more preferably 90 to 100 mol%, still more preferably 95 to 100 mol%, still more preferably 99 to 100 mol%, and still more preferably 100 mol%. The structural unit derived from the alcohol compound having a (meth)acrylic group may be composed only of the structural unit derived from 2-hydroxylethyl methacrylate.

As the polyol, a diol is preferable.

The diol is preferably at least one selected from the group consisting of ethylene glycol, propylene glycol, bisphenols, hydrogenated bisphenols, etherified diphenols, and neopentyl glycol.

The polyol may be used singly or in combination of two or more kinds thereof.

Examples of the polyester polyol include those obtained by polycondensation of a dibasic acid and a diol.

The dibasic acid is preferably at least one selected from the group consisting of phthalic acid, tetrahydrophthalic acid, succinic acid, adipic acid, sebacic acid, and dimer acid, and more preferably at least one selected from the group consisting of terephthalic acid and tetrahydrophthalic acid.

The diol is preferably at least one selected from the group consisting of bisphenols, hydrogenated bisphenols, neopentyl glycol, ethylene glycol, and propylene glycol, more preferably at least one selected from the group consisting of bisphenols, hydrogenated bisphenols, and neopentyl glycol, and still more preferably at least one selected from the group consisting of hydrogenated bisphenol A and neopentyl glycol.

Among the polyester polyols, a polyester polyol obtained by polycondensation of terephthalic acid and neopentyl glycol, and a polyester polyol obtained by polycondensation of tetrahydrophthalic anhydride and hydrogenated bisphenol A are still more preferable.

The component composed of the polyester polyol may be used singly or in combination of two or more kinds thereof.

The total content of the structural unit derived from 1,6-hexamethylene diisocyanate and the structural unit derived from 2-hydroxylethyl methacrylate in the urethane (meth)acrylate (A) is preferably 70 to 100 mass%, more preferably 80 to 100 mass%, still more preferably 90 to 100 mass%, still more preferably 95 to 100 mass%, still more preferably 99 to 100 mass%, and still more preferably 100 mass%. The urethane (meth)acrylate (A) may be composed only of the structural unit derived from 1,6-hexamethylene diisocyanate and the structural unit derived from 2-hydroxylethyl methacrylate. When the total content of the structural unit derived from 1,6-hexamethylene diisocyanate and the structural unit derived from 2-hydroxylethyl methacrylate is within the above range, the radically polymerizable resin composition can be freely adjusted in shape while having necessary magnetic properties as a raw material of a bonded magnet, and is further excellent in moldability and curability and also excellent in handleability.

The urethane (meth)acrylate (A) is a crystalline urethane (meth)acrylate. When the urethane (meth)acrylate (A) is crystalline, the radically polymerizable resin composition is particularly excellent in handleability.

The melting point of the urethane (meth)acrylate (A) is preferably 30 to 150°C, and more preferably 30°C to 120°C.

The urethane (meth)acrylate (A) is preferably solid at 23°C.

When the urethane (meth)acrylate (A) has the above-described properties, the radically polymerizable resin composition is also particularly excellent in handleability. When the urethane (meth)acrylate (A) is solid, the shape of the composition does not change under the environment of production, molding, and transportation of the radically polymerizable resin composition. Therefore, continuous production can be performed under general-purpose production facilities and conditions, which is preferable. Note that the solid does not easily change in shape and volume due to external force.

The content of the urethane (meth)acrylate (A) is preferably 10 to 60 mass%, more preferably 10 to 50 mass%, still more preferably 10 to 40 mass%, still more preferably 15 to 35 mass%, still more preferably 15 to 30 mass%, and still more preferably 20 to 30 mass% based on the total amount of the radically polymerizable resin composition. When the content of the urethane (meth)acrylate (A) is within the above range, the radically polymerizable resin composition can be freely adjusted in shape while having necessary magnetic properties as a raw material of a bonded magnet, and is further excellent in moldability and curability, and is also excellent in handleability.

### <Magnetic powder (B)>

The radically polymerizable resin composition of this disclosure contains a magnetic powder (B).

The magnetic powder (B) may be a powdery material having magnetism, and is preferably at least one selected from the group consisting of a ferrite magnetic powder, an Alnico magnetic powder, and a rare earth magnetic powder, more preferably at least one selected from the group consisting of a ferrite magnetic powder and a rare earth magnetic powder, and is still more preferably a rare earth magnetic powder from the viewpoint of moldability and curability.

The rare earth magnetic powder is a compound containing a rare earth element and a transition metal element.

Examples of the rare earth element include La, Ce, Pr, Nd, Sm, Eu, Gd, Tb, Dy, Ho, Er, Tm, Yb, and Lu. The rare earth element is preferably at least one selected from the group consisting of Nd (neodymium) and Sm (samarium), and more preferably Sm.

Examples of the transition metal element include Fe, Co, Ni, and Mn. The transition metal element is preferably at least one selected from the group consisting of Fe (iron) and Co (cobalt), and more preferably Fe.

The rare earth magnetic powder is preferably at least one selected from the group consisting of samarium iron nitrogen magnetic powder such as Sm-Fe-N, samarium cobalt magnetic powder such as Sm-Co, and neodymium magnetic powder such as Nd-Fe-B, and more preferably samarium iron nitrogen magnetic powder.

That is, the magnetic powder (B) is preferably at least one selected from the group consisting of samarium iron nitrogen magnetic powder, samarium cobalt magnetic powder, and neodymium magnetic powder from the viewpoint of moldability and curability, and more preferably samarium iron nitrogen magnetic powder from the viewpoint of moldability and curability.

The ferrite magnetic powder is preferably at least one selected from the group consisting of barium ferrite magnetic powder and strontium ferrite magnetic powder.

The magnetic powder (B) may be used singly or in combination of two or more kinds thereof.

The content of the magnetic powder (B) is preferably 100 to 500 parts by mass, more preferably 100 to 450 parts by mass, still more preferably 100 to 400 parts by mass, still more preferably 120 to 400 parts by mass, still more preferably 150 to 400 parts by mass, still more preferably 200 to 400 parts by mass, and still more preferably 300 to 400 parts by mass based on 100 parts by mass of the urethane (meth)acrylate (A). When the content of the magnetic powder (B) is within the above range, the radically polymerizable resin composition can be freely adjusted in shape while having necessary magnetic properties as a raw material of a bonded magnet, and is further excellent in moldability and curability, and also excellent in handleability.

### <Radical polymerization initiator (C)>

The radically polymerizable resin composition of this disclosure contains a radical polymerization initiator (C).

The radical polymerization initiator (C) is used for quickly obtaining a homogeneous cured product during molding. The types and amounts thereof may be used depending on the application.

The radical polymerization initiator (C) is preferably an organic peroxide.

The organic peroxide is preferably at least one selected from the group consisting of a ketone peroxide compound, a diacyl peroxide compound, a peroxy ester compound, a hydroperoxide compound, a dialkyl peroxide compound, and a peroxyketal compound, more preferably at least one selected from the group consisting of a peroxy ester compound and a dialkyl peroxide compound, and still more preferably a dialkyl peroxide compound.

Examples of the ketone peroxide compound include methyl ethyl ketone peroxide and acetyl acetone peroxide.

Examples of the diacyl peroxide compound include dibenzoyl peroxide.

Examples of the peroxy ester compound include t-butyl peroxybenzoate, t-butyl peroxyoctoate, and t-butylperoxy-2-ethylhexyl monocarbonate.

Examples of the dialkyl peroxide compound include dicumyl peroxide and t-butylcumyl peroxide.

Examples of the peroxyketal compound include 1,1-di(t-hexylperoxy)cyclohexane, 1,1-di(t-butylperoxy)cyclohexane, and 1,1-di(t-butylperoxy)-3,3,5-trimethylcyclohexane.

The organic peroxide may be used singly or in combination of two or more kinds thereof.

Among them, from the viewpoint of the degree of freedom of molding conditions and storage stability, the organic peroxide is preferably at least one selected from the group consisting of dicumyl peroxide, t-butylperoxy-2-ethylhexyl monocarbonate, and t-butylcumyl peroxide, and more preferably dicumyl peroxide.

The 10-hour half-life temperature of the radical polymerization initiator (C) is preferably 80 to 150°C, more preferably 100 to 130°C, and still more preferably 110 to 120°C. When the 10-hour half-life temperature of the radical polymerization initiator (C) is within the above range, the resin composition can be stored for a long period of time, and the curing rate is also excellent. The polymerization initiator may be used singly or in combination of two or more kinds thereof.

The content of the radical polymerization initiator (C) is preferably 0.1 to 3.0 parts by mass, more preferably 0.2 to 2.0 parts by mass, still more preferably 0.3 to 1.0 parts by mass, and still more preferably 0.3 to 0.8 parts by mass based on 100 parts by mass of the urethane (meth)acrylate (A). When the content of the radical polymerization initiator (C) is within the above range, the resin composition can be stored for a long period of time, and the curing rate is also excellent.

### <N-oxyl compound (D)>

The radically polymerizable resin composition of this disclosure contains an N-oxyl compound (D), and the content of the N-oxyl compound (D) is 0.20 to 0.60 parts by mass based on 100 parts by mass of the urethane (meth)acrylate (A).

When the radically polymerizable resin composition of this disclosure contains the N-oxyl compound (D), the radically polymerizable resin composition can secure a sufficient pot life while maintaining excellent curability, and thus has excellent moldability.

The N-oxyl compound (D) is preferably at least one selected from the group consisting of 2,2,6,6-tetraalkylpiperidine-1-oxyls, 2,2,5,5-tetraalkylpyrrolidine-1-oxyls, and 2-azaadamantane-N-oxyls, and more preferably 2,2,6,6-tetraalkylpiperidine-1-oxyls. Each of the N-oxyl compounds may have a substituent.

As the 2,2,6,6-tetraalkylpiperidine-1-oxyls, 2,2,6,6-tetramethylpiperidine-1-oxyls are preferable.

The 2,2,6,6-tetramethylpiperidine-1-oxyl is preferably at least one selected from the group consisting of 2,2,6,6-tetramethylpiperidine-1-oxyl and 2,2,6,6-tetramethylpiperidine-1-oxyl having a substituent at the 4-position, and more preferably 2,2,6,6-tetramethylpiperidine-1-oxyl having a substituent at the 4-position.

The 2,2,6,6-tetramethylpiperidine-1-oxyl having a substituent at the 4-position is preferably at least one selected from the group consisting of 4-hydroxy-2,2,6,6-tetramethylpiperidine-1-oxyl and 4-acyloxy-2,2,6,6-tetramethylpiperidine-1-oxyl, and more preferably 4-hydroxy-2,2,6,6-tetramethylpiperidine-1-oxyl. That is, the N-oxyl compound (D) is particularly preferably 4-hydroxy-2,2,6,6-tetramethylpiperidine-1-oxyl.

Examples of the acyl group of 4-acyloxy-2,2,6,6-tetramethylpiperidine-1-oxyl include an acetyl group and a benzoyl group.

The content of the N-oxyl compound (D) is 0.20 to 0.60 parts by mass based on 100 parts by mass of the urethane (meth)acrylate (A).

The content of the N-oxyl compound (D) is preferably 0.25 to 0.60 parts by mass, more preferably 0.30 to 0.60 parts by mass, and still more preferably 0.40 to 0.60 parts by mass based on 100 parts by mass of the urethane (meth)acrylate (A). When the content of the N-oxyl compound (D) is within the above range, the radically polymerizable resin composition is excellent in moldability and curability.

### <Other components>

The radically polymerizable resin composition of this disclosure may contain, as other components, a release agent, a colorant, a reinforcing material, a thermoplastic resin, a flame retardant, and the like as long as the effects of this disclosure are not impaired.

The radically polymerizable resin composition of this disclosure preferably does not substantially contain a quinone-based polymerization inhibitor or a phenol-based polymerization inhibitor, and particularly preferably does not substantially contain a phenol-based polymerization inhibitor.

Therefore, the content of the phenol-based polymerization inhibitor in the radically polymerizable resin composition of this disclosure is preferably 0.05 parts by mass or less, more preferably 0.01 parts by mass or less, still more preferably 0.001 parts by mass or less, and still even more preferably 0.0001 parts by mass or less based on 100 parts by mass of the urethane (meth)acrylate (A). Furthermore, the radically polymerizable resin composition of this disclosure still even more preferably does not contain a phenol-based polymerization inhibitor.

Similarly, the content of the quinone-based polymerization inhibitor in the radically polymerizable resin composition of this disclosure is preferably 0.05 parts by mass or less, more preferably 0.01 parts by mass or less, still more preferably 0.001 parts by mass or less, and still even more preferably 0.0001 parts by mass or less based on 100 parts by mass of the urethane (meth)acrylate (A). Furthermore, the radically polymerizable resin composition of this disclosure still even more preferably does not contain a quinone-based polymerization inhibitor.

The colorant is, for example, preferably carbon black.

The content of the colorant is preferably 0.02 to 1 mass%, more preferably 0.05 to 0.7 mass%, still more preferably 0.1 to 0.5 mass%, and still more preferably 0.1 to 0.4 mass% in the radically polymerizable resin composition.

As the release agent, a fatty acid-based release agent, a fatty acid metal salt-based release agent, and a mineral-based wax which are generally used for a thermosetting resin can be used, and a fatty acid metal salt-based release agent having excellent heat discoloration resistance is preferable.

Examples of the release agent include stearic acid, stearate, and paraffin wax, and stearate is preferable.

Examples of the stearate include zinc stearate, aluminum stearate, and calcium stearate, and zinc stearate is preferable. The release agent may be used singly or in combination of two or more kinds thereof.

As the release agent, an external release agent which is a type to be sprayed or applied to a mold or an internal release agent such as molding material containing a release agent can also be used as necessary.

The reinforcing material is preferably glass fiber.

Examples of the glass fiber include glass fibers made of silicate glass or borosilicate glass as a raw material, such as E glass (alkali-free glass for electricity), C glass (alkali-containing glass for chemistry), A glass (acid-resistant glass), and S glass (high-strength glass). Glass fibers obtained by processing these glass fibers into long fibers (roving), short fibers (chopped strands), or milled fibers can be used. Furthermore, these glass fibers may be surface-treated.

By using a reinforcing material, a cured product having excellent strength characteristics and dimensional stability can be obtained.

Examples of the thermoplastic resin include polystyrene, acrylic resin, poly(vinyl acetate), and styrene-butadiene-based rubber.

As the flame retardant, organic flame retardants such as a halogen-based flame retardant, a phosphorus-based flame retardant, a nitrogen-based flame retardant, and a complex-type flame retardant; and inorganic flame retardants such as metal hydroxide, an antimony-based flame retardant, a red phosphorus-based flame retardant, a silicone-based flame retardant, and borate can be used. Furthermore, as these flame retardants, an additive-type flame retardant or a reactive-type flame retardant that reacts with a resin and is incorporated into a resin skeleton can also be used. These flame retardants may be used singly or in combination of two or more kinds thereof.

The radically polymerizable resin composition of this disclosure may contain a radically polymerizable compound other than the urethane (meth)acrylate (A) as long as the effects of this disclosure are not impaired.

Examples of the radically polymerizable compound other than the urethane (meth)acrylate (A) include a urethane (meth)acrylate other than the urethane (meth)acrylate (A), epoxy (meth)acrylate, polyester (meth)acrylate, polyether (meth)acrylate, a radically polymerizable monomer, and a radically polymerizable prepolymer.

The ratio of the urethane (meth)acrylate (A) in the radically polymerizable compound contained in the radically polymerizable resin composition of this disclosure is preferably 70 to 100 mass%, more preferably 80 to 100 mass%, still more preferably 90 to 100 mass%, still more preferably 95 to 100 mass%, still more preferably 99 to 100 mass%, and still more preferably 100 mass%. The radically polymerizable compound contained in the radically polymerizable resin composition may be composed only of the urethane (meth)acrylate (A).

### <Method for producing radically polymerizable resin composition>

The radically polymerizable resin composition of this disclosure may be obtained by any method. However, the radically polymerizable resin composition can be produced by blending the respective components, sufficiently uniformly mixing the components using a mixer, a blender, or the like, then preparing the radically polymerizable resin composition by a kneader, an extruder, or the like that can perform heating and pressurizing, and granulating the radically polymerizable resin composition.

The shape of the radically polymerizable resin composition of this disclosure can be selected according to the application, such as a granular material, a powder, or a tablet. The radically polymerizable resin composition is preferably a granular material, and the granular material is preferably composed of the radically polymerizable resin composition. The granular material is more preferably a pellet. The granular material is preferably composed of the radically polymerizable resin composition.

### [Magnet]

The magnet of this disclosure is obtained by molding the radically polymerizable resin composition.

That is, the magnet of this disclosure is a magnet obtained by molding a radically polymerizable resin composition, wherein the radically polymerizable resin composition contains a urethane (meth)acrylate (A) and a magnetic powder (B), the urethane (meth)acrylate (A) has a structural unit derived from 1,6-hexamethylene diisocyanate and a structural unit derived from 2-hydroxylethyl methacrylate, the urethane (meth)acrylate (A) is a crystalline urethane (meth)acrylate, the radically polymerizable resin composition contains a radical polymerization initiator (C) and an N-oxyl compound (D), and the content of the N-oxyl compound (D) is 0.20 to 0.60 parts by mass based on 100 parts by mass of the urethane (meth)acrylate (A).

Since the magnet of this disclosure is produced using the radically polymerizable resin composition having excellent moldability, curability, and handleability as a raw material, the magnet of this disclosure can have various shapes and can be applied to a wide range of applications.

The method for producing the magnet of this disclosure is not limited, and the magnet can be obtained by molding using various ordinary molding methods for a thermosetting composition.

As a method for molding the radically polymerizable resin composition, a melt heating molding method such as an injection molding method, an injection compression molding method, a transfer molding method, or a compression molding method can be suitably used. Among them, an injection molding method using an injection molding machine and a transfer molding method using a transfer molding machine are particularly suitable. The molding time can be shortened by the injection molding method, and many molded articles can be molded at a time by the transfer molding method.

As described above, the magnet of this disclosure preferably includes a step of molding a granular material composed of the radically polymerizable resin composition by an injection molding method or a transfer molding method.

The temperature and pressure for the radically polymerizable resin composition at the time of injection into a mold are not particularly limited. In a case of using an injection molding machine, when the temperature of the radically polymerizable resin composition is set to 60 to 130°C, the mold temperature is set to 130 to 190°C, and the pressure for the radically polymerizable resin composition is set to 0.1 to 10 MPa, damage to the magnet is reduced, which is preferable. In a case of using a transfer molding machine, when the mold temperature is set to 130 to 190°C and the pressure for the radically polymerizable resin composition is set to 0.1 to 10 MPa, damage to the magnet is reduced, which is preferable.

### [Examples]

Hereinafter, an embodiment of this disclosure will be described in more detail with reference to examples, but this disclosure is not limited to these examples at all.

### <Production of radically polymerizable resin composition>

Examples 1 to 4 and Comparative Examples 1 to 3

The following components were blended so as to have the composition described in Table 1, heated and kneaded using a kneader until the components are uniformly mixed, and then cooled to obtain a radically polymerizable resin composition.

The following components were used as blending components.
(1) Crystalline urethane (meth)acrylate
   2-Hydroxylethyl methacrylate adduct of 1,6-hexamethylene diisocyanate (melting point is 77°C, solid at 23°C)
(2) Amorphous radically polymerizable resin
   Amorphous vinyl ester resin (methacrylic acid adduct of a bisphenol A type epoxy resin, having no melting point, liquid at 23°C)
(3) Magnetic powder
   Magnetic powder 1: ferrite magnetic powder (Fe₂O₃)
   Magnetic powder 2: neodymium magnetic powder (Nd-Fe-B)
   Magnetic powder 3: samarium iron nitrogen magnetic powder (Sm-Fe-N)
(4) Radical polymerization initiator
   Dicumyl peroxide (PERCUMYL D-40, purity 40%, manufactured by NOF CORPORATION)
(5) N-oxyl compound
   4-Hydroxy-2,2,6,6-tetramethylpiperidine-1-oxyl (4H-TEMPO)
(6) Polymerization inhibitor
   p-Benzoquinone (PBQ, manufactured by Seiko Chemical Co., Ltd.)

### <Evaluation method>

### (1) Moldability (T1 - Tm)

Ten mg of the radically polymerizable resin composition obtained in each of Examples and Comparative Examples was put in an aluminum pan, the aluminum pan was then sealed by pressing a lid, and this was used as a measurement sample. The measurement sample was heated from - 60°C to 200°C at a rate of 10°C/min with a differential scanning calorimeter "DSC6220" (manufactured by Seiko Instruments Inc.), and a curve was obtained. The heat absorption end temperature in the obtained curve was defined as Tm (°C), the heat generation start temperature was defined as T1 (°C), and the difference between Tm and T1 was determined. As the difference between Tm and T1 increases, a pot life from plasticization to curing of the radically polymerizable resin composition can be provided, so that moldability is excellent. Note that the heat absorption end temperature is a temperature at an intersection point where the DSC curve on the high-temperature side of the melting peak and the baseline intersect. The heat generation start temperature is a temperature at an intersection point where the baseline intersects the DSC curve on the low-temperature side of the exothermic peak.

Since no melting peak was observed in the amorphous vinyl ester resin, this evaluation was not performed.

### (2) Curability

### Curing completion temperature (T2)

Ten mg of the radically polymerizable resin composition obtained in each of Examples and Comparative Examples was put in an aluminum pan, the aluminum pan was then sealed by pressing a lid, and this was used as a measurement sample. The measurement sample was heated from - 60°C to 200°C at a rate of 10°C/min with a differential scanning calorimeter "DSC6220" (manufactured by Seiko Instruments Inc.), and a curve was obtained. The heat generation completion temperature of the obtained curve was defined as a curing completion temperature (T2). As the curing completion temperature (T2) is lower, the curing can be completed more quickly, and thus the curability is excellent. The heat generation completion temperature is a temperature at an intersection point where the DSC curve on the high-temperature side of the exothermic peak and the baseline intersect.

### (3) Handleability

The radically polymerizable resin composition obtained in each of Examples and Comparative Examples was formed into a cylindrical shape having a diameter of 1 cm and a height of 3 cm. The temperature of the cylindrical radically polymerizable resin composition was adjusted to 23°C in a thermostatic chamber set at 23°C. Then, a weight of 50 g was placed onto the cylindrical radically polymerizable resin composition whose temperature was adjusted to 23°C. Deformation of the cylindrical shape (difference in height of the cylinder before and after placing the weight) and adhesion of the radically polymerizable resin composition to the weight after 15 minutes were evaluated according to the following criteria. As the deformation of the cylindrical shape is smaller and the adhesion to the weight is smaller, the radically polymerizable resin composition retains a solid state at normal temperature, and is excellent in handleability at the time of molding.

### (Evaluation criteria)

∘: Almost no deformation of the cylindrical shape was observed (difference in height of the cylinder is less than 1 mm). There is less adhesion of the composition to the weight.
△: Deformation of the cylindrical shape was observed (difference in height of the cylinder is 1 mm or more and less than 15 mm). There is adhesion of the composition to the weight.
×: Large deformation of the cylindrical shape was observed (difference in height of the cylinder is 15 mm or more). There is a lot of adhesion of the composition to the weight.

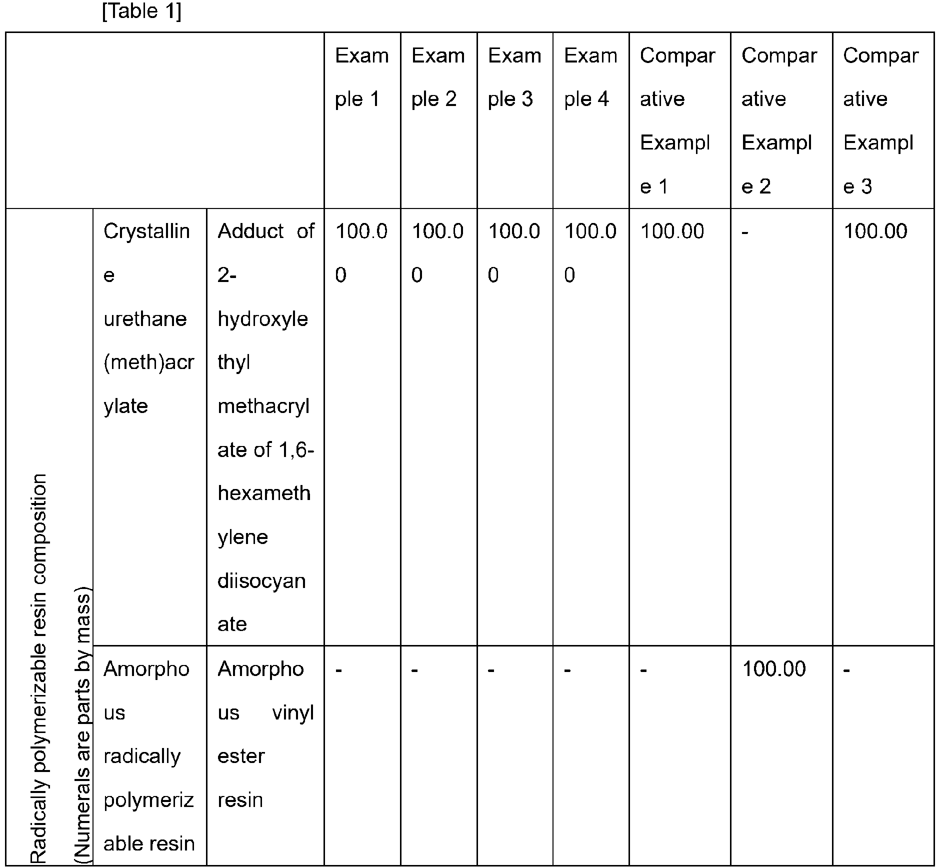

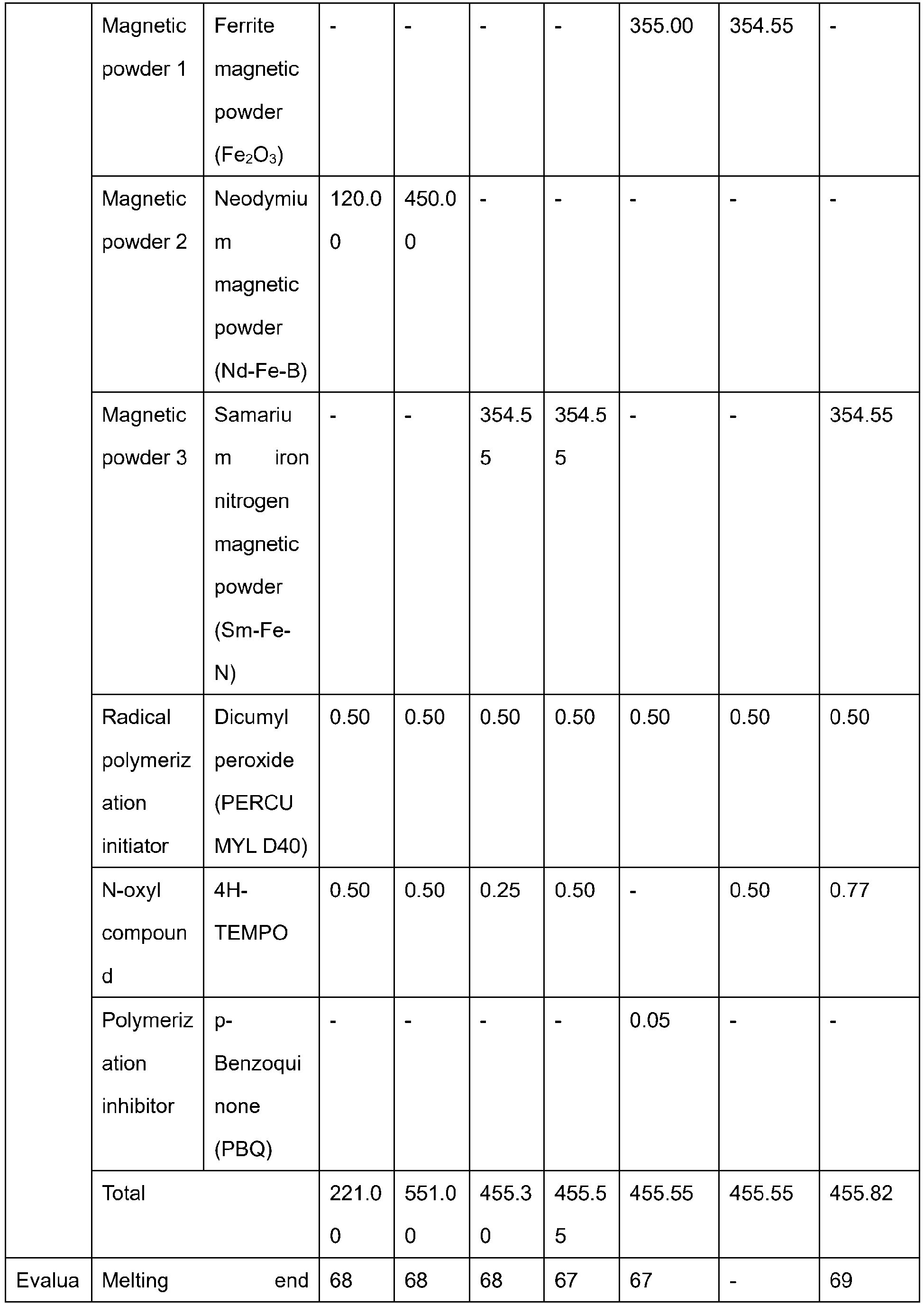

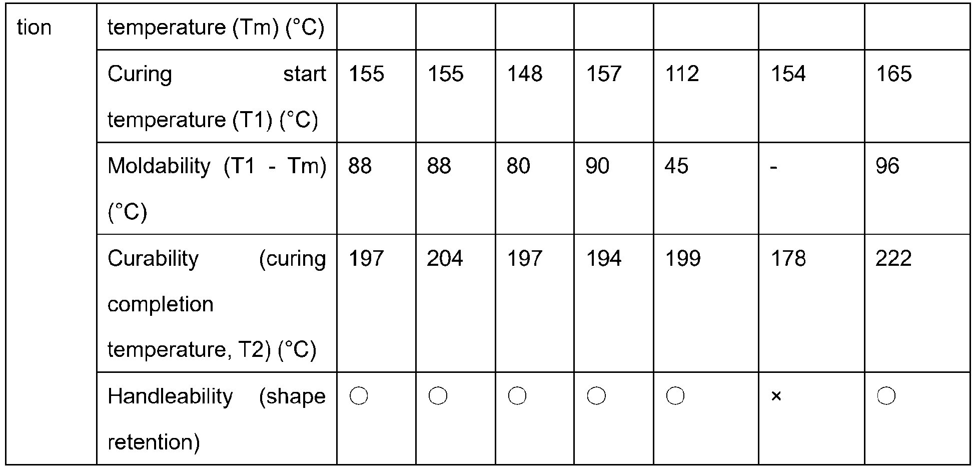

Table 1 shows that the radically polymerizable resin compositions of Examples have a large temperature difference from plasticization to curing, and a sufficient pot life is provided. Table 1 also shows that the curing completion temperature is low, and the curing can be completed in a short time. Furthermore, Table 1 shows that the radically polymerizable resin compositions can retain a solid state at normal temperature without being sticky. Thus, the radically polymerizable resin composition of this disclosure is excellent in moldability and curability, and is also excellent in handleability, and thus can be suitably used as a raw material of a bonded magnet.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A radically polymerizable resin composition comprising a urethane (meth)acrylate (A) and a magnetic powder (B), wherein
the urethane (meth)acrylate (A) has a structural unit derived from 1,6-hexamethylene diisocyanate and a structural unit derived from 2-hydroxylethyl methacrylate,
the urethane (meth)acrylate (A) is a crystalline urethane (meth)acrylate,
the radically polymerizable resin composition contains a radical polymerization initiator (C) and an N-oxyl compound (D), and
a content of the N-oxyl compound (D) is 0.20 to 0.60 parts by mass based on 100 parts by mass of the urethane (meth)acrylate (A).

2. The radically polymerizable resin composition according to Claim 1, wherein the urethane (meth)acrylate (A) has a melting point of 30 to 150°C.

3. The radically polymerizable resin composition according to Claim 1 or 2, wherein the urethane (meth)acrylate (A) is solid at 23°C.

4. The radically polymerizable resin composition according to any one of Claims 1 to 3, wherein a total content of the structural unit derived from 1,6-hexamethylene diisocyanate and the structural unit derived from 2-hydroxylethyl methacrylate in the urethane (meth)acrylate (A) is 90 to 100 mass%.

5. The radically polymerizable resin composition according to any one of Claims 1 to 4, wherein the N-oxyl compound (D) is 4-hydroxy-2,2,6,6-tetramethylpiperidine-1-oxyl.

6. The radically polymerizable resin composition according to any one of Claims 1 to 5, wherein a content of the N-oxyl compound (D) is 0.35 to 0.60 parts by mass based on 100 parts by mass of the urethane (meth)acrylate (A).

7. The radically polymerizable resin composition according to any one of Claims 1 to 6, wherein a content of the phenol-based polymerization inhibitor is 0.05 parts by mass or less based on 100 parts by mass of the urethane (meth)acrylate (A).

8. The radically polymerizable resin composition according to any one of Claims 1 to 7, wherein a 10-hour half-life temperature of the radical polymerization initiator (C) is 80 to 150°C.

9. The radically polymerizable resin composition according to any one of Claims 1 to 8, wherein a content of the magnetic powder (B) is 100 to 500 parts by mass based on 100 parts by mass of the urethane (meth)acrylate (A).

10. The radically polymerizable resin composition according to any one of Claims 1 to 9, wherein the magnetic powder (B) is at least one selected from the group consisting of a ferrite magnetic powder, an Alnico magnetic powder, and a rare earth magnetic powder.

11. The radically polymerizable resin composition according to any one of Claims 1 to 10, wherein the magnetic powder (B) is at least one selected from the group consisting of samarium iron nitrogen magnetic powder, samarium cobalt magnetic powder, and neodymium magnetic powder.

12. The radically polymerizable resin composition according to any one of Claims 1 to 11, wherein the magnetic powder (B) is samarium iron nitrogen magnetic powder.

13. A magnet obtained by molding the radically polymerizable resin composition according to any one of Claims 1 to 12.
